# EUROPEAN PATENT APPLICATION

(11) **EP 3 002 161 A1**
(43) Date of publication of application: **06.04.2016**
(21) Application number: 14306549.8
(22) Date of filing: 01.10.2014
(51) Int. Cl.: B60R 25/021

(54) **An antitheft device for a steering column of a vehicle**

(71) Applicant: U-Shin France, 94046 Créteil Cedex (FR)
(72) Inventor: Poggi, Patrice, 94046 Creteil Cedex (FR)
(74) Representative: Huisman, Aurélien

(57) **Abstract**

An antitheft device for a steering column of a vehicle, the device comprising a locking bolt 12 able to occupy a position for locking a steering column 20, a slider 14 for maneuvering the locking bolt 12 between a locked and a free position passing by an unlocked position, a camshaft 16 able to rotate about its axis and comprising at least a first contact zone 161 arranged to slide on a first contact area 141 of the slider 14 upon rotation of the camshaft, and a second contact zone 162 arranged to slide on a second contact area 142 of the slider 14 upon rotation of the camshaft.

## Description

The invention relates to an antitheft device for a steering column of a vehicle.

These devices generally include a lock part cooperating with an ignition key. The lock part comprises a rotor intended to receive the insert of the authorized key surrounded by a fixed stator. The rotor is able to rotate and make to rotate a camshaft cooperating with the lock bolt.

The lock bolt is designed for blocking the movement of the steering column when the vehicle is parked, also called "locked position", and for unblocking the said movement when the vehicle is used by an authorized user, also called "unlocked position". Such antitheft devices therefore prevent car thefts.

Generally, the unlocking of the antitheft device is done by turning the authorized key into the rotor. However, such movement requires a certain force that must be applied by a human hand. Depending on the vehicle user, the force to apply can prove difficult for certain persons, such as old or arm/wrist injured people.

Additionally, under certain conditions, a worn out key forced upon the rotor to unlock the steering column can snap under the heavy torque applied. This can prove bothersome as well as painful for the vehicle user.

One object of the invention is to provide an antitheft device for a steering column of a vehicle, in particular a locking bolt designed such as the antitheft device does not present the drawbacks mentioned hereinabove.

To this end, the invention an antitheft device for a steering column of a vehicle, the device comprising:
- a locking bolt able to occupy a position for locking a steering column,
- a slider for maneuvering the locking bolt between a locked and a free position passing by an unlocked position,
- a camshaft able to rotate about its axis and comprising at least:
- a first contact zone arranged to slide on a first contact area of the slider upon rotation of the camshaft, and
- a second contact zone arranged to slide on a second contact area of the slider upon rotation of the camshaft,
wherein
the contact zones of the camshaft and the contact areas of the slider being arranged so that upon rotation of said camshaft the slider has a translating movement,
the first contact zone of the camshaft and the first contact area of the slider being arranged so that upon rotation of said camshaft the slider has a translation movement that maneuvers the locking bolt from the locked position to the unlocked position,
the first contact zone of the camshaft being closer to the axis of rotation of the camshaft than the second contact zone.

Advantageously, the antitheft device according to the invention provides a locking bolt rotation with a low key torque. The unlocking movement of the locking bolt can then be executed by old or arm/wrist injured people without a risk of a snap of the authorized key. The unlocking of the antitheft device is smoother, providing a safest and fast movement for the user.

According to further embodiments which can be considered alone or in combination:
- the second contact zone of the camshaft and the second contact area of the slider are arranged so that upon rotation of said camshaft the slider has a translation movement that maneuvers the locking bolt from the unlocked position to the free position; and/or
- the first contact area of the slider is substantially plane and perpendicular to the axis of translation of the slider; and/or
- the first contact zone of the camshaft and the first contact area of the slider are arranged such as a rotation of an angle α of the camshaft from the locked position causes a translating movement of the slider that maneuvers the locking bolt from the locked position to the unlocked position, with α smaller than or equal to 35°; and/or
- the second contact zone of the camshaft and the second contact area of the slider are arranged such as a rotation of an angle α of the camshaft from the locked position causes the second contact zone of the camshaft to slide on the second contact area of the slider, with α greater than or equal to 35°; and/or
- the second contact area of the slider comprises a plane contact area and a curved contact area, the second contact zone of the camshaft and the second contact area of the slider being arranged so that upon rotation of said camshaft from the unlocked position to the free position, the second contact zone first slides on the plane contact area and then on the curved contact area; and/or
- the second contact zone of the camshaft and the second contact area of the slider are arranged so that upon rotation of said camshaft the second contact zone of the camshaft continuously slides from the plane contact area and the curved contact area; and/or
- the plane contact area of the second contact area of the slider has an angle with the axis of translation of the slider greater than or equal to 30° and smaller than or equal to 60°; and/or
- the center of curvature of the curved contact area of the second contact area of the slider is inward to the slider; and/or
- the rotation axis of the camshaft has an angle greater than or equal to 60° and smaller than or equal to 90° with the axis of translation of the slider; and/or
- the camshaft has a cylindrical shape; and/or
- the antitheft device further comprises a rotor able to receive a key and configured to drag in rotation the camshaft; and/or
- the rotation axis of the camshaft is substantially the same as the rotation axis of the rotor.

Non limiting embodiments of the invention will now be described with reference to the accompanying drawing wherein:
- Figure 1 is an isometric overview of an antitheft device according to the invention,
- Figure 2 shows the main parts of one embodiment of the antitheft device interacting with each other,
- Figure 3a represents a camshaft according to an embodiment of the invention,
- Figure 3b represents a slider according to an embodiment of the invention,
- Figures 4a to 6b show the translation of the locking bolt according to the invention when the slider is actuated by a camshaft according to the invention.

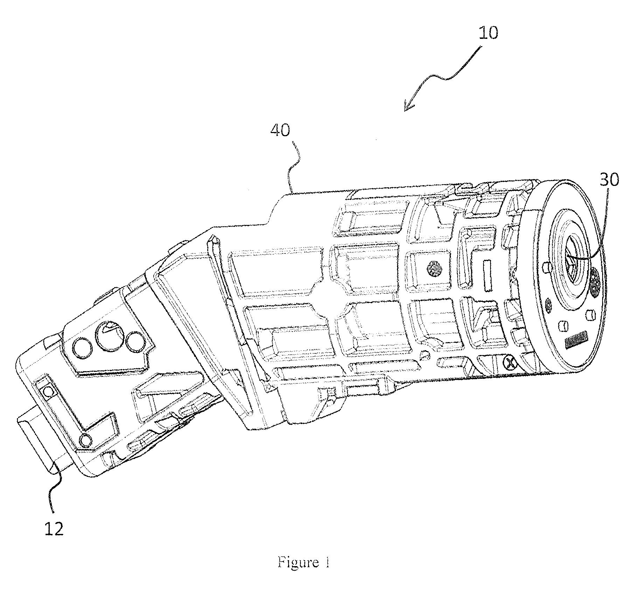

Figure 1 represents an isometric overview of an antitheft device 10 as isolated from a vehicle. The device comprises a lock part 30 intended to cooperate with an authorized key, which, when turned, permits the ignition of the electric power supply to the components of the vehicle, such as the motor, and actuates a locking bolt 12 to occupy a position to block the steering column 20 (not shown in figure 1) of the vehicle, corresponding to the locked position. When electrical power is supplied to the vehicle, the said locking bolt 12 occupies a position to unblock the steering column 20 (not shown in figure 1) of the vehicle, corresponding to the unlocked position.

An "authorized key" is here a key which when the insert of such key is introduced in the lock part, the said key may be turned without making any effort.

The antitheft device is enclosed in a housing 40. The housing 40 is then embedded in a vehicle.

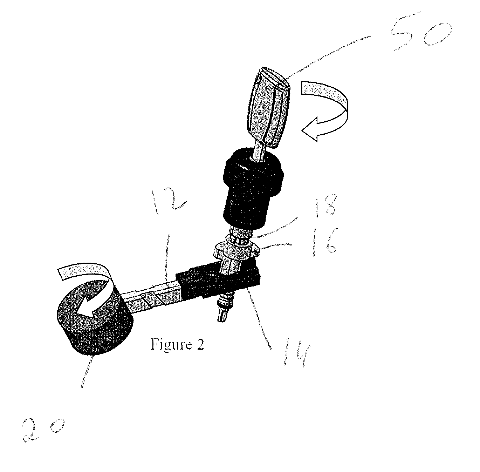

Figure 2 shows the main parts of an antitheft device according to the invention.

The antitheft device of the invention comprises a slider 14 for maneuvering the locking bolt 12 between a locked and a free position passing by an unlocked position and a camshaft 16 able to rotate about its axis. The camshaft 14 is maneuvered by a rotor 18 intended to receive the insert of the authorized key. Specifically, when the authorized key 50 is inserted into the lock part 30 and turned, the rotor 18 rotates, dragging along the camshaft 16 on the same axis of rotation.

The camshaft 16 comprises a first contact zone arranged to slide on a first contact area of the slider 14 upon rotation of the camshaft, and a second contact zone arranged to slide on a second contact area of the slider 14 upon rotation of the camshaft that permit, when rotating the camshaft, to induce a uniform translating movement to the slider 14. The slider 14 translates within a slide in the housing 40 to enable a unilateral movement, the translation direction forming an angle with the axis of rotation of the camshaft 16 that is greater than 60° and smaller than 90°, for example about 75°.

The slider 14 then drags along the locking bolt 12, which is located in a bolt housing not represented, the bolt housing may be embedded in the housing 40. The bolt housing allows the bolt 12 to slide in only one axis and to interact with the steering column. The actuation of the rotor 18 using the insert of the authorized key controls the position of the locking bolt 12, thus blocking or unblocking the steering column.

The steering column 20 shown on figure 2 comprises a slot 22 adapted to receive the locking bolt 12 which permits the locking in position of the steering column 20 about its axis of rotation. Whenever the steering column 20 is in its locked position, and if a torque is applied to the column axis, the steering column 20 applies a force on the locking bolt 12. This force, depending on its intensity, is a source of the difficulty (or impossibility) to unlock the steering column 20 by solely turning the insert of the authorized key in the lock part 30.

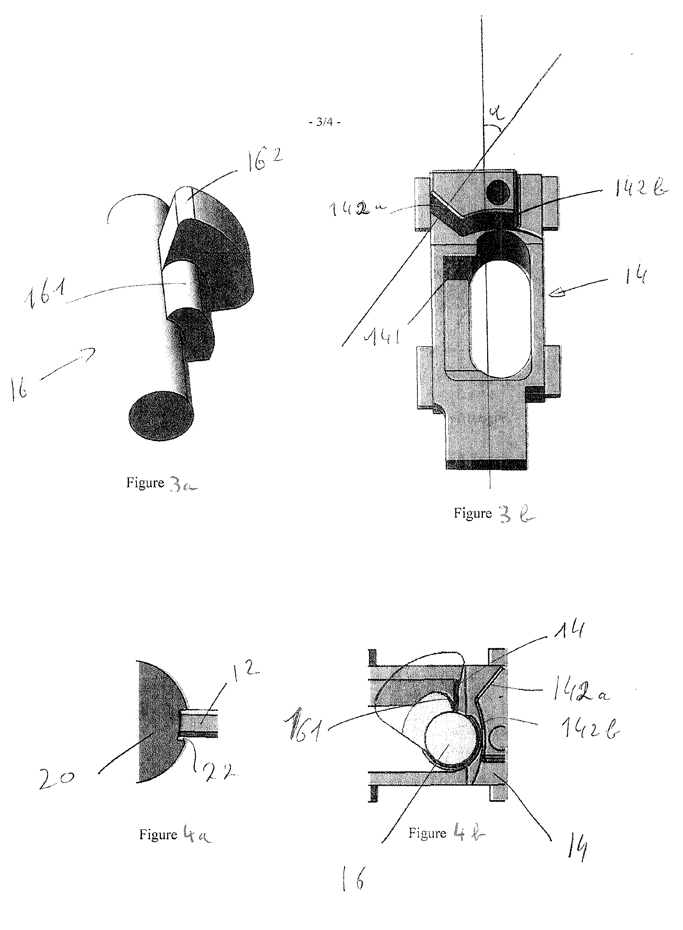

According to the embodiment shown in figures 3a and 3b,the camshaft 16 has a cylindrical shape and comprises a first contact zone 161 arranged to slide on a first contact area 141 of the slider 14 upon rotation of the camshaft, and a second contact zone 162 arranged to slide on a second contact area 142 of the slider upon rotation of the camshaft. As represented on figure 3a, the first contact zone 161 of the camshaft 16 is closer to the axis of rotation of the camshaft than the second contact zone 162. Thanks to the invention, the unlocking of the steering column 20 is making easier by improving the design of the camshaft 16 and the slider, without adding new components, in order to reduce the torque that the vehicle user needs to apply to the key to unlock the steering column 20. The delay for unlocking the steering column is also no longer than the one of the antitheft device of the prior art.

The camshaft torque being proportionate to the radial distance between the axis of rotation of the camshaft and the contact zone, having a first contact zone closer to the axis of rotation allows reducing the camshaft torque when unlocking the steering column. So as to catch up with the slider movement and so as to have the slider reach the free position, the second contact zone 162 is to be further out to the axis of rotation.

The contact zones 161 and 162 of the camshaft 16 and the contact areas 141 and 142 of the slider 14 are arranged so that upon rotation of said camshaft 16 the slider has a translating movement.

As represented on figure 3a, the contact areas 161 and 162 of the camshaft have rounded shapes, for example shapes close to the cylindrical shape of the camshaft.

As illustrated on figure 3b, the first contact area 141 of the slider is substantially plane and perpendicular to the axis of translation of the slider.

As illustrated on figure 3b, the second contact area 142 comprises two sub-contact areas 142a and 142b.

The first sub-contact area 142a is substantially plane. The plane of the second sub-contact area 142a is oriented so that the angle between the normal to said plane and the axis of translation of the slider is greater than or equal to 20°, for example greater than or equal to 30° and smaller than or equal to 60°, for example smaller than or equal to 40°.

The second sub-contact area 142b has a curved shape, for example has a circular shape. As illustrated on figure 3b, according to a preferred embodiment the center of curvature of the second sub-contact area 142b is inward to the slider. In other words, the center of curvature of the second sub-contact area 142b is located closer to the geometrical center of the slider than the second sub-contact area itself. Advantageously such orientation reduces the force to be applied to the camshaft when sliding along the second sub-contact area 142b.

Figures 4a to 6b represent the different positions of the camshaft 16 according to one embodiment of the invention in regard to the slider 14, and the position of the bolt 12 in interaction with the steering column 20 relating to the corresponding positions of the camshaft 16 as represented in the figures. Also, the figures 4a to 6b illustrate the unlocking of the steering column after the camshaft 16 has interacted with the slider 14 by through the first contact zone 161 sliding on the first contact area 141, hence at the beginning of the second contact zone 162 sliding with the second contact area 142.

On figure 4a, the steering column 20 is blocked in position with the bolt 12 located in the slot 22 of the steering column 20. In this position, a pre-load is generally applied on the steering column 20. Therefore, the steering column 20 exerts a force on the bolt 12 that prevents the bolt 12 to be easily removed from the slot 22 of the steering column 20. In this embodiment, the configuration of the contact zones of the camshaft and the contact areas of the slider enables the slider 14 to drag the locking bolt 12 with a low force applied on the key.

As illustrated on figures 4a and 4b, the camshaft 16 and the slider 14 are arranged so that starting from the locked position of the slider, when rotating the camshaft the first contact zone 161 of the camshaft slides on the first contact area 141 of the slider. The first contact zone of the camshaft and the first contact area of the slider are arranged so that upon rotation of said camshaft 16 the slider has a translation movement that maneuvers the locking bolt 12 from the locked position to the unlocked position. Typically, the camshaft and the slider are arranged so that an angular rotation of the camshaft of an angle α, smaller than or equal to 35° about the axis of rotation of the camshaft causes a translation of the slider that maneuvers the locking bolt 12 form the locked position to the unlocked position.

During the sliding of the first contact zone of the camshaft on the first contact area 141 of the slider 14, the stroke evolution of the locking bolt 12 is slow, but allows the locking bolt 12 to begin its course to unlock the steering column 20 without requiring an important force from the user.

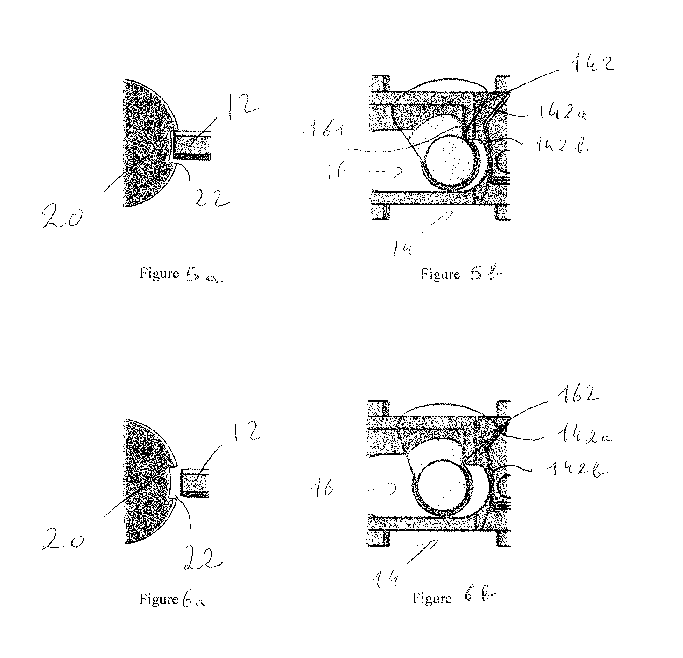

On figures 5a and 5b, the steering column 20 is close to the unlocked position. The bolt 12 is still in contact with the steering column 20 but the torque applied by the steering column 20 to the bolt 12 is negligible. The first contact zone of the camshaft remains in contact with the first contact area of the slider but the second contact zone of the camshaft gets closer to the first sub-contact area 142a of the second contact area 142 of the slider 14.

At this point, the locking bolt 12 gets slowly closer to its unlocked position, while the force needed to be applied to the key remains low.

As represented on figures 6a and 6b, as the second contact zone 162 of the camshaft contacts and starts sliding on the first sub-contact area 142a of the second contact area 142 of the slider 14, the steering column 20 should be unlocked. However, the locking bolt 12 needs to finish completely its course, in order to ensure that the locking bolt 12 does not get caught in the slot 22 of the steering column 20. Then, at this point, the steering column 20 does not exert any force on the bolt 12. Thus, the force needed to translate the locking bolt 12 is very low.

The second contact zone 162 of the camshaft 16 continuously slides along the first sub-contact area 142a and then from the first sub-contact area 142a to the second sub-contact area 142b to finish the stroke of the bolt 12 and to finalize the unlocking action. The design of the first 142a and second 142b sub-contact areas of the slider 14 permit to quickly finish the stroke of the locking bolt 12 with low force from the vehicle user. Thanks to the invention, the time for unlocking the steering column is no longer than the one of antitheft devices of the prior art.

The invention has been described above with the aid of embodiments without limitation of the general inventive concept.

Many further modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An antitheft device for a steering column of a vehicle, the device comprising:
- a locking bolt (12) able to occupy a position for locking a steering column (20),
- a slider (14) for maneuvering the locking bolt (12) between a locked and a free position passing by an unlocked position,
- a camshaft (16) able to rotate about its axis and comprising at least:
- a first contact zone arranged to slide on a first contact area of the slider upon rotation of the camshaft, and
- a second contact zone arranged to slide on a second contact area of the slider upon rotation of the camshaft,
the contact zones of the camshaft and the contact areas of the slider being arranged so that upon rotation of said camshaft (16) the slider has a translating movement,
the first contact zone of the camshaft and the first contact area of the slider being arranged so that upon rotation of said camshaft (16) the slider has a translation movement that maneuvers the locking bolt (12) from the locked position to the unlocked position,
the first contact zone of the camshaft being closer to the axis of rotation of the camshaft than the second contact zone.

2. The antitheft device according to claim 1, wherein the second contact zone of the camshaft and the second contact area of the slider are arranged so that upon rotation of said camshaft (16) the slider has a translation movement that maneuvers the locking bolt (12) from the unlocked position to the free position.

3. The antitheft device according to claim 1 or 2, wherein the first contact area of the slider is substantially plane and perpendicular to the axis of translation of the slider.

4. The antitheft device according to the preceding claim, wherein the first contact zone of the camshaft and the first contact area of the slider are arranged such as a rotation of an angle α of the camshaft (16) from the locked position causes a translating movement of the slider (14) that maneuvers the locking bolt (12) from the locked position to the unlocked position, with α smaller than or equal to 35°.

5. The antitheft device according to the preceding claim, wherein the second contact zone of the camshaft and the second contact area of the slider are arranged such as a rotation of an angle α of the camshaft (16) from the locked position causes the second contact zone of the camshaft to slide on the second contact area of the slider, with α greater than or equal to 35°.

6. The antitheft device according to any of the preceding claims, wherein the second contact area of the slider comprises a plane contact area and a curved contact area, the second contact zone of the camshaft and the second contact area of the slider being arranged so that upon rotation of said camshaft from the unlocked position to the free position, the second contact zone first slides on the plane contact area and then on the curved contact area.

7. The antitheft device according to the preceding claim, wherein the second contact zone of the camshaft and the second contact area of the slider are arranged so that upon rotation of said camshaft (16) the second contact zone of the camshaft continuously slides from the plane contact area and the curved contact area.

8. The antitheft device according to claim 6 or 7, wherein the plane contact area of the second contact area of the slider has an angle with the axis of translation of the slider greater than or equal to 30° and smaller than or equal to 60°.

9. The antitheft device according to any of claims 6 to 8, wherein the center of curvature of the curved contact area of the second contact area of the slider is inward to the slider.

10. The antitheft device according to any of the preceding claims, wherein the rotation axis of the camshaft has an angle greater than or equal to 60° and smaller than or equal to 90° with the axis of translation of the slider.

11. An antitheft device according to any of the preceding claims, wherein the camshaft (16) has a cylindrical shape.

12. The antitheft device according to any of the preceding claims, further comprising a rotor able to receive a key and configured to drag in rotation the camshaft.

13. An antitheft device according to any of the preceding claims, wherein the rotation axis of the camshaft (16) is substantially the same as the rotation axis of the rotor (18).
